# EUROPEAN PATENT APPLICATION

(11) **EP 1 591 225 A2**
(43) Date of publication of application: **02.11.2005**
(21) Application number: 05103544.2
(22) Date of filing: 28.04.2005
(51) Int. Cl.: B29C 44/34

(54) **Method and device for regulating the temperature of a fluid along a feeder tube**

(30) Priority: 30.04.2004 IT MO20040095
(71) Applicant: Duna-Corradini S.r.l., 41019 Soliera MO (IT)
(72) Inventor: Corradi, Marco, 42100 Reggio Emilia (IT)
(74) Representative: Modiano, Guido

(57) **Abstract**

A method for thermostatically regulating a fluid along a conveyance tube, particularly a polymeric foam fluid component along a feeder tube of a dispenser, comprising supplying fluid contained in a conveyance tube (1) with thermal energy along at least one portion (2) of the conveyance tube (1) varying according to a distance from one of the opposite ends (2a, 2b) of the portion (2), detecting the temperature (T) of the fluid (F) at at least one distance (d) from the end (2a), comparing the detected temperature (T) with a presettable reference value, and interrupting or activating supply when the detected temperature is equal to, or lower than, the reference value. The device for thermostatically regulating a fluid along a conveyance tube comprises an electrical conductor (4), associable with a power supply (5) and inserted in at least one portion (2) of a tube (1) for conveying fluid thermostatically regulated and with a resistance variable according to the distance (d) from at least one of the opposite ends (2a, 2b) of the portion (2), and sensors (6) for the temperature of the fluid (F) at at least one distance from the end (2a).

## Description

The present invention relates to a method and a device for thermostatically regulating a fluid along a conveyance tube, particularly a fluid component of polymeric foams along a feeder tube of a dispenser of said foams.

The need to adjust the temperature and thermostatically regulate a fluid along a conveyance tube is known in various industrial and handicraft fields.

In the field of the production of polymeric foams, for example, it is known that the components of said foams, before being mixed together, must be regulated thermostatically to a preset temperature, such as to ensure their minimal reactivity, for correct growth and development of said foam, and so as to reduce their viscosity to values that facilitate their mixing.

For example, in the case of polyurethane foams, the two components (isocyanate and polyol) must be regulated thermostatically to an average temperature that can vary between 40 and 65° Celsius depending on the formulation of the mixture that is used.

Foam dispensers are known which are used for example to manufacture bags or padding for packaging and are essentially constituted by tanks for storing the components of said foams, from which said components are drawn by respective pumps and are sent to respective conveyance tubes, which feed them into a mixing chamber provided with a foam dispenser.

In order to thermostatically regulate the components to the intended temperature, thermostatic regulation devices are known which comprise an electrical conductor that is supplied with alternating current and is inserted along their conveyance tubes; the heat generated by Joule effect warms the components conveyed by the tubes. Known devices further comprise a temperature probe, which is inserted along the component conveyance tubes at a preset distance between their opposite ends, respectively for the inflow of the (cold) components drawn from the tanks and for the outflow of the (hot) components in the mixing chamber.

The electrical conductor is constituted by a coiled cable, in which the turns are distributed with a constant pitch along the entire length of the conveyance tubes; the supplied thermal energy is therefore constant along the entire length of the conveyance tubes.

A control and monitoring unit activates and deactivates the supply of current and the dispensing of foam depending on the temperature values detected by the probe.

When the device starts, after an initial transition and before the first dispensing of foam, all of the fluid contained along the conveyance tubes is uniformly thermostatically regulated to the intended temperature.

After the first dispensing of foam and after each successive dispensing, which occur at unpredictable time intervals from each other and in variable quantities depending on the various requirements of use of the foams, the fluid contained in the conveyance tubes has a temperature that is uneven along their entire length, since it is colder along their initial portion, which is closer to their inflow ends, and warmer along their end portion, which is closer to their outflow end.

When the probe detects the presence of a fluid at the temperature that is lower than the preset temperature, the control and monitoring unit deactivates the dispensing of foam and starts the supply of current until the probe detects the presence of fluid at the intended temperature.

When instead the probe detects the presence of a fluid at the intended temperature, the control and actuation unit deactivates the supply of current.

These known thermostatic regulators are not free from drawbacks, including the fact that they do not allow precise and constant thermostatic regulation of the fluids conveyed along the tubes, and particularly the components of foams, and the fact that they do not allow a "continuous" dispensing of said fluids at the intended temperature, in that they do not ensure the dispensing of any flow-rate of fluid that is correctly thermostatically regulated, regardless of its extent and of the moment when it is requested.

It should in fact be noted that thermostatic regulation of the fluid depends on the position where the temperature probe is arranged.

For example, if the probe is arranged along the initial portion of the conveyance tube, proximate to the end where the cold fluid enters, when the dispensing of a certain flow-rate of fluid is required, said probe detects the presence of the fluid in input at a temperature that is lower than the set value and accordingly the control and monitoring unit activates the supply of current; the fluid that is present along the end portion of the tube, proximate to its output end, is therefore subjected to unwanted overheating and is dispensed at a temperature that is higher than the intended value.

If instead the probe is arranged along the end portion of the conveyance tube, proximate to its output end, when it detects the presence of a fluid at a temperature that is lower than the set value, the control and monitoring unit activates the supply of current and interrupts the dispensing of the fluid until the probe detects the presence of fluid at the set temperature, the length of the end portion of the conveyance tube being insufficient to ensure heating of all the fluid contained therein up to said temperature.

Because of this, the possibility to dispense said fluid becomes "discontinuous", i.e., in the time interval required to reach the set temperature it is not possible to dispense any flow-rate of fluid that might be requested by the user.

The dispensing action can be interrupted also if the probe is arranged along the initial portion of the conveyance tube.

The aim of the present invention is to eliminate the above-mentioned drawbacks of known devices, by providing a method and a device for thermostatically regulating a fluid along a conveyance tube, particularly a fluid component of polymeric foams along a feeder tube of a dispenser of said foams, which allow to provide precision thermostatic regulation of the conveyed fluid and to ensure immediate availability and "continuous" dispensing of thermostatically-regulated fluid at a chosen temperature, regardless of the flow-rate required by the user and of the moment when it is requested.

Within this aim, an object of the present invention is to provide a structure that is simple, relatively easy to provide in practice, safe in use, effective in operation, and has a relatively low cost.

This aim and this object are achieved by the present method for thermostatically regulating a fluid along a conveyance tube, particularly a fluid component of polymeric foams along a feeder tube of a dispenser of said foams, characterized in that it comprises supplying the fluid contained in a conveyance tube with thermal energy along at least one portion of said conveyance tube that can vary according to the distance from one of the opposite ends of said portion, detecting the temperature of the fluid at at least one distance from said end, comparing the detected temperature with a presettable reference value, and interrupting or activating said supply when the detected temperature is respectively equal to, or lower than, said reference value.

This aim and this object are also achieved by the present device for thermostatically regulating a fluid along a conveyance tube, particularly a fluid component of polymeric foams along a feeder tube of a foam dispenser, characterized in that it comprises an electrical conductor, which can be associated with means for supplying electric power and is inserted in at least one portion of a tube for conveying a fluid to be thermostatically regulated and has a resistance that can vary according to the distance from at least one of the opposite ends of said portion, and means for detecting the temperature of said fluid at at least one distance from said end.

Further characteristics and advantages of the present invention will become better apparent from the following detailed description of a preferred but not exclusive embodiment of a method and a device for thermostatically controlling a fluid along a conveyance tube, particularly a fluid component of polymeric foams along a feeder tube of a dispenser of said foams, illustrated by way of non-limiting example in the accompanying drawings, wherein:
Figure 1 is a schematic chart that plots the behavior of the temperature as a function of the distance from one end of a conveyance tube achieved with the methods and the devices for thermostatically regulating a fluid along a conveyance tube according to the background art;
Figure 2 is a schematic chart that plots the behavior of the temperature as a function of the distance from one end of a conveyance tube achieved with the method and the device for thermostatically regulating a fluid along a conveyance tube according to the invention;
Figure 3 is a schematic chart that plots the behavior of the thermal energy as a function of the distance from one end of a conveyance tube supplied with the method and the device for thermostatically regulating a fluid along a conveyance tube according to the invention;
Figure 4 is a schematic view of a device for thermostatically regulating a fluid along a conveyance tube according to the invention;
Figure 5 is a schematic view of a polymeric foam dispenser with the thermostatic regulation device according to the invention applied thereto.

With reference to the figures, the reference numeral 1 generally designates a tube for conveying a fluid F to be thermostatically regulated, such as for example a component of a polymeric foam, such as for example isocyanate or polyol for forming a polyurethane foam.

The method according to the invention comprises supplying the fluid F contained in the tube 1 with thermal energy, which can vary along at least one portion 2 of the tube 1 depending on the distance d from one of the opposite ends of the portion 2, i.e., from the input end 2a or from the output end 2b of the fluid F, the reference letter V designating the arrow of the direction of the stream of said fluid; merely by way of example, let d be the distance from the input end 2a.

Further, the method according to the invention comprises detecting the temperature T of the fluid F at at least one distance d from the input end 2a, comparing the detected temperature with a presettable reference value, and interrupting or activating the supply of thermal energy when the detected temperature is respectively equal to, or lower than, the preset reference value.

The thermal energy or power W varies from a minimum initial value to a maximum final value in the direction V of the stream of the fluid F in the portion 2; it varies according to an increasing function from the initial minimum value to the final maximum value, and in particular it varies according to a stepwise discontinuous function.

However, the supplied thermal energy might also vary according to a continuous and optionally linear function.

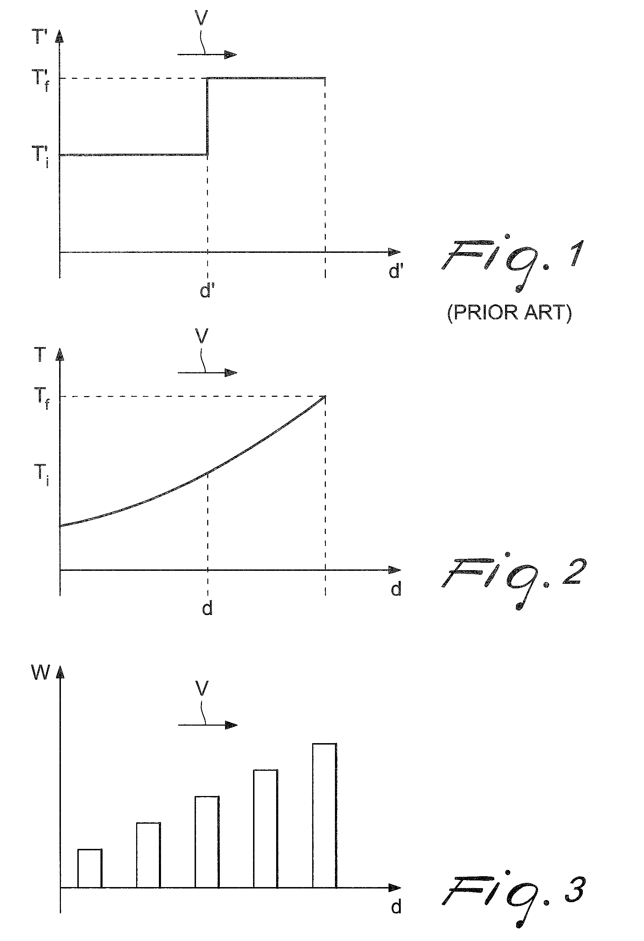

As shown in Figure 2, which plots the behavior of the temperature T of the fluid F along the portion 2 depending on the distance d from the input end 2a, with the method according to the invention the temperature T of the fluid F varies according to an increasing and continuous function from a minimum initial value Tᵢ to a maximum final value T_{f} in the direction V of its flow along the portion 2; in particular, the temperature T can vary according to a linear function.

Regardless of the distance d at which the temperature T of the fluid F is detected, the method according to the invention allows to detect without delays the inflow, upstream of the distance d, of a fluid at a temperature that is lower than the set reference value and therefore to activate the supply of thermal energy until the fluid F has reached the set temperature.

This allows to achieve a substantially continuous availability of fluid F that is correctly thermostatically regulated and available at the output 2b.

With the methods and the devices according to the background art, which supply a thermal energy that is constant with respect to the distance d' from the input end 2a, instead, for equal physical conditions, the behavior of the temperature T' of the fluid F along the portion 2 of the tube 1 according to the distance d', shown schematically in Figure 1, is stepwise; it is constituted by a first substantially constant portion at the initial minimum value Tᵢ' and by a second substantially constant portion at the final maximum value T_{f}', joined by a step proximate to the distance d', where the temperature T' of the fluid F is detected.

This chart clearly shows that the methods and the devices according to the background art do not allow to provide precise thermostatic regulation of the fluid F or to ensure its continuous availability in a correctly thermostatically regulated condition, since thermostatic regulation in fact depends on the distance d'.

If in fact the distance d', i.e., the point where the temperature T' of the fluid is detected in order to be compared with a set reference value, is proximate to the input end 2a, when the dispensing of a certain flow-rate of fluid F in output from the output end 2b is requested, the presence of an input fluid at a temperature that is lower than the set value is detected, and accordingly the supply of thermal energy is activated; the fluid F that is present along the end portion of the portion 2, proximate to its output end 2b, therefore undergoes an unwanted overheating and is dispensed at a temperature that is higher than the intended value.

If instead the distance d', i.e., the point where the temperature T' of the fluid is detected in order to be compared with a set reference value, is proximate to the output end 2b, when the presence of a fluid at a temperature that is lower than the set temperature is detected, in addition to activating the supply of thermal energy it is necessary to interrupt the dispensing of the fluid F until the presence of fluid at the set temperature is detected, since the length of the end portion of the portion 2 is insufficient to ensure the heating of all the fluid contained therein to such temperature.

This causes the possibility to dispense said fluid to be "discontinuous", in that in the time interval required to reach the set temperature it is not possible to dispense any flow-rate of fluid requested by the user.

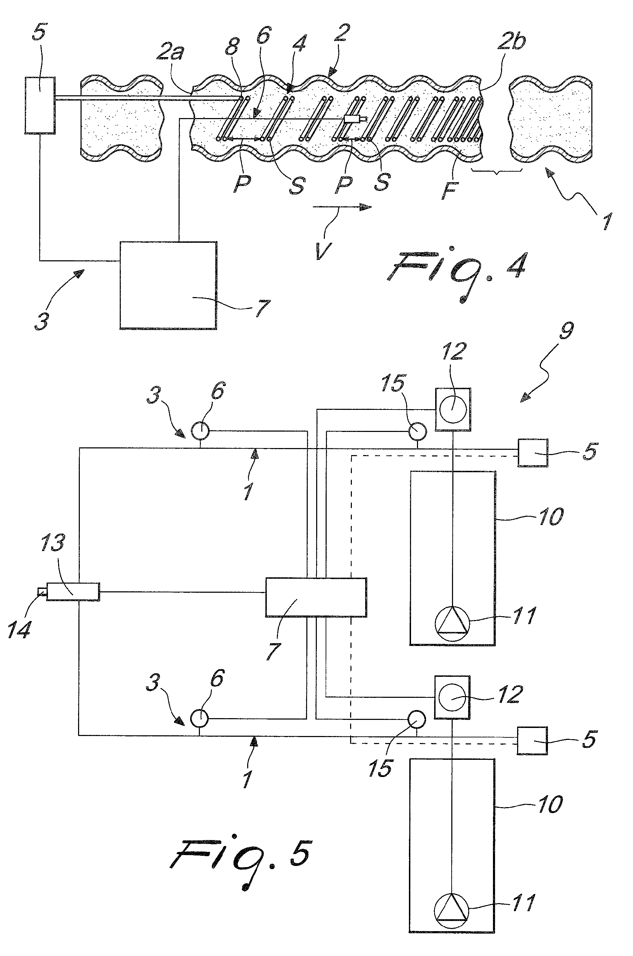

Figure 4 illustrates a possible embodiment of a device 3 for thermostatically regulating the fluid F along the tube 1, which comprises an electrical conductor 4, which can be associated with means 5 for supplying electric power and is inserted at least in the portion 2 of the tube 1 and has a variable resistance depending on the distance d from the input end 2a, and means 6 for detecting or sensing the temperature T of the fluid F arranged at the distance d from the input end 2a, such as for example a probe.

The device 3 further comprises a control and monitoring unit 7, which is associated with the sensor means 6 and with the power supply means 5 and is suitable to compare the temperature detected by the sensor means 6 with a presettable reference value and to deactivate or activate the power supply means 5 respectively when the detected temperature is equal to, or lower than, the reference value.

The resistance of the conductor 4 varies from an initial minimum value to a final maximum value in the direction V of the stream of fluid F in the portion 2 according to an increasing function; in particular, the resistance of the conductor 4 varies according to a discontinuous stepwise function.

However, different embodiments are also possible in which the resistance varies according to a continuous and optionally linear function.

The conductor 4 comprises a cable 8, which is coiled in a spiral with turns S having a pitch P that can vary depending on the distance d; the pitch P varies from an initial maximum value to a final minimum value in the direction V of the stream of fluid F in the portion 2.

Conveniently, the cable 8 is folded double and the spiral is double; this allows to have the power supply terminals at a single end of the portion 2 and further allows to eliminate the electromagnetic fields that are generated with a single spiral and can interfere with the device 3 and in particular with the sensing means 6, altering their readout.

However, alternative embodiments of the conductor 4 are not excluded; for example, it could be constituted by a cable that has a cross-section that can vary according to the distance d and increases from an initial minimum value to a final maximum value in the direction V of the stream of the fluid F.

Figure 5 schematically designates a dispenser apparatus 9 for dispensing polymeric foams, particularly polyurethane foams, to which the device 3 is applied.

The apparatus 9 comprises means for storing the fluids that compose a polymeric foam, such as for example drums 10, means for drawing and conveyance, such as for example pumps 11 driven by motors 12, of the component fluids from the storage means 9 to the input end of respective conveyance tubes 1, a chamber 13 for mixing the component fluids that is associated with the output end of the tubes 1 and is provided with a foam dispenser 14.

A respective thermostatic regulator 3 according to the invention, not shown in detail, is arranged along the two tubes 1.

The control and monitoring unit 7 is associated not only with the temperature sensing means 6 and with the means 5 for supplying electric power to the cables 8, but also with the motors 12 and with means 15 for sensing the pressure of the fluid F inside the tubes 1.

In practice it has been found that the invention thus described achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02004A000095 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for thermostatically regulating a fluid along a conveyance tube, particularly a fluid component of polymeric foams along a feeder tube of a dispenser of said foams, **characterized in that** it comprises supplying the fluid contained in a conveyance tube (1) with thermal energy (W) along at least one portion (2) of said conveyance tube (1) that can vary according to the distance from one of the opposite ends (2a, 2b) of said portion (2), detecting the temperature (T) of the fluid (F) at at least one distance (d) from said end (2a, 2b), comparing the detected temperature (T) with a presettable reference value, and interrupting or activating supplying when the detected temperature is respectively equal to, or lower than, said reference value.

2. The method according to claim 1, **characterized in that** said thermal energy (W) varies from an initial minimum value to a final maximum value in the direction (V) of the flow of said fluid (F) in such portion (2).

3. The method according to one or more of the preceding claims, **characterized in that** said thermal energy (W) varies according to an increasing function from said minimum value to said maximum value.

4. The method according to one or more of the preceding claims, **characterized in that** said thermal energy (W) varies according to a stepwise discontinuous function.

5. The method according to one or more of the preceding claims, **characterized in that** said thermal energy (W) varies according to a continuous function.

6. The method according to one or more of the preceding claims, **characterized in that** said thermal energy (W) varies according to a linear function.

7. The method according to one or more of the preceding claims, **characterized in that** the temperature (T) of said fluid (F) along said portion (2) varies according to the distance (d) from one of said opposite ends (2a, 2b) according to a function that increases from an initial minimum value (Tᵢ) to a final maximum value (T_{f}) in the direction (V) of the flow of said fluid (F) in said portion (2).

8. The method according to one or more of the preceding claims, **characterized in that** the temperature (T) of said fluid (F) along said portion (2) varies according to a continuous function.

9. The method according to one or more of the preceding claims, **characterized in that** the temperature (T) of said fluid (F) along said portion varies according to a linear function.

10. A device for thermostatically regulating a fluid along a conveyance tube, particularly a fluid component of polymeric foams along a feeder tube (1) of a foam dispenser, **characterized in that** it comprises an electrical conductor (4), which can be associated with means (5) for supplying electric power and is inserted in at least one portion (2) of a tube (1) for conveying a fluid (F) to be thermostatically regulated and has a resistance that can vary according to the distance (d) from at least one (2a) of the opposite ends (2a, 2b) of said portion (2), and means (6) for sensing the temperature (T) of said fluid (F) at at least one distance (d) from said end (2a).

11. The device according to claim 10, **characterized in that** it comprises a control and monitoring unit (7), which is associated with said sensing means (6) and with said power supply means (5), said unit (7) being suitable to compare the temperature detected by said sensing means (6) with a presettable reference value and to deactivate or activate said power supply means (5) respectively when the detected temperature is equal to, or lower than, said reference value.

12. The device according to claims 10 or 11, **characterized in that** said resistance varies from an initial minimum value to a final maximum value in the direction (V) of the flow of said fluid (F) in said portion (2).

13. The device according to one or more of claims 10 to 12, **characterized in that** said resistance varies according to an increasing function.

14. The device according to one or more of claims 10 to 13, **characterized in that** said resistance varies according to a discontinuous stepwise function.

15. The device according to one or more of claims 10 to 13, **characterized in that** said resistance varies according to a continuous function.

16. The device according to one or more of claims 10 to 13 and 15, **characterized in that** said resistance varies according to a linear function.

17. The device according to one or more of claims 10 to 16, **characterized in that** said conductor (4) comprises a cable (8) that has a variable cross-section depending on said distance (d) and increases from an initial minimum value to a final maximum value in the direction of the flow of said fluid (F).

18. The device according to one or more of claims 10 to 16, **characterized in that** said conductor (4) comprises a cable (8) that is wound in a spiral with turns (S) that have a variable pitch (P) depending on said distance (d).

19. The device according to one or more of claims 10 to 16 and 18, **characterized in that** said cable (8) has a substantially constant cross-section as a function of said distance.

20. The device according to one or more of claims 10 to 16 and 18 to 19, **characterized in that** said cable (8) is folded double, said spiral being double.

21. The device according to one or more of claims 10 to 16 and 18 to 20, **characterized in that** said pitch (P) varies from an initial maximum value to a final maximum value in the direction (V) of the flow of said fluid (F) in said portion (2).

22. A dispenser for polymeric foams, particularly polyurethane foams, of the type that comprises means (10) for storing the fluids that compose a polymeric foam, means (11, 12) for drawing and sending said component fluids from said storage means (9) to the input end of respective conveyance tubes (1), a chamber (13) for mixing component fluids, which is associated with the output end of said conveyance tubes (1) and is provided with a foam dispenser (14), and devices (3) for the thermostatic regulation of said component fluids, which are associated with said conveyance tubes (1), **characterized in that** at least one of said thermostatic regulation devices (5) is of the type according to claims 10 to 21.
